# EUROPEAN PATENT SPECIFICATION

(11) **EP 0 567 718 B1**
(45) Date of publication and mention of the grant of the patent: **29.12.1997**
(21) Application number: 92830526.7
(22) Date of filing: 25.09.1992
(51) Int. Cl.: G11B 23/113, G11B 23/20

(54) **Cutting and splicing unit for automatic cassette loading machines and method of loading tape carried out by the same**
Einheit zum Schneiden und Verbinden für ein automatisches Kassettenladegerät und damit durchgeführtes Verfahren zum Bandladen
Unité de découpage et soudage pour un appareil de chargement automatique de cassette et méthode de chargement de la bande effectuée par cette dernière

(30) Priority: 29.04.1992 IT MI921019; 28.08.1992 IT MI922026
(43) Date of publication of application: 03.11.1993
(73) Proprietor: TAPEMATIC S.p.A., I-20052 Monza (Milano) (IT)
(72) Inventor: Perego, Luciano, I-20050 Mezzago (MI) (IT)
(74) Representative: Righetti, Giuseppe

(56) References cited:
- GB-A- 2 107 075
- US-A- 3 825 461
- US-A- 4 204 898
- US-A- 4 747 554

## Description

The present invention relates to a cutting and splicing unit for automatic cassette loading machines said cutting and splicing unit comprising the features recited in the preamble of claim 1.

The present invention relates to a method of loading tape carried out by said unit, comprising the steps recited in claim 13.

It is known that audio or video tape cassettes essentially comprise a shell made of plastic material, rotatably housing a first and a second winding hubs, around which a blank or pre-recorded magnetic tape is wound, said tape extending along an access opening formed in the shell and optionally protected by an openable lid.

In industrial processes for making these cassettes, automatic machines are currently used in which the magnetic tape fed from a reel is guided as far as a loading station in which the cassettes being processed and coming from a feeder are individually engaged, in order to be loaded with a desired amount of magnetic tape and subsequently discharged onto conveyor means moving them away from the loading machine.

Cassettes reaching the loading station are provided with a leader of predetermined length the opposite ends of which are engaged to the first and second winding hubs, respectively. By suitable extractor means the leader is taken out of the cassette access opening, upon opening of the protection door when present, in order to be submitted to the action of a cutting and splicing unit.

The cutting and splicing unit is generally such arranged that it engages the leader and magnetic tape by a first, second and third supporting surfaces formed on respective blocks. In greater detail, the first supporting surface is formed on a first block which is fixed relative to a front panel of the loading machine. The second and third supporting surfaces, formed on one or two movable blocks, can be individually and selectively moved close to the first supporting surface, aligned in coplanar relation therewith. On extracting the leader from the cassette, the first and second supporting surfaces are aligned in coplanar relation with each other and lend themselves to receive the leader thereon, retaining it by effect of suction produced through holes opening into said surfaces.

By a blade movable upon command of an actuator, the leader is then cut perpendicularly to its longitudinal extension and divided into a leading portion and a trailing portion connected to the first and second winding hubs respectively.

At this point, the movable block or blocks are moved in order to cause the first supporting surface carrying the leading portion of the cut leader to be aligned in coplanar relation with the third supporting surface holding the magnetic tape end from the supply reel mounted on the loading machine. The ends of the magnetic tape and leading portion of the leader, joined end-to-end are spliced by application of an adhesive tape piece carried by a gripper member that has previously taken it from an adhesive tape supply unit. This supply unit has the function of drawing the adhesive tape from a feed roll, moving it forward and cutting it into pieces of predetermined length at each work cycle of the gripper member.

When splicing has been completed, the first winding hub is driven in rotation in order to cause the threading of the desired amount of magnetic tape into the cassette. When the winding is over, the magnetic tape extending on the first and third supporting surfaces is cut by said blade. The positioning between the third and second supporting surfaces is changed over so that the trailing portion of the leader is moved close to and in alignment with the end of the cut tape located on the first supporting surface and then spliced to the tape itself by application of another piece of adhesive tape carried by the gripper member.

The trailing portion of the leader and end portion of the adhesive tape are completely wound within the cassette, then the cassette is ejected from the loading station and a new cassette to be loaded takes its place.

Presently different typologies of cutting and splicing units are available. While said units are similar in the manufacturing and operating concept, they have different structural and practical features that are selected depending upon the type of cassettes being processed and, in particular, the length of the leader provided therein.

Audio cassettes known on the market as "Philips type" have a rather long leader. In this case, the blocks carrying the leader and the magnetic tape supporting surfaces are spaced apart sideways relative to the loading station, in order to be able to receive thereon the leader which is extracted and moved apart sideways from the cassette access opening. In particular, the second and third supporting surfaces are formed on a single movable block disposed close to the fixed block and movable perpendicularly to the front panel of the machine in order to selectively align the second or third supporting surfaces with the first supporting surface. The cutting member operated by an actuator, moves through an opening formed on the front panel of the loading machine whereas the adhesive tape supply unit is mounted to the front panel above the blocks, so that the corresponding gripper member can reach the junction area by a substantially vertical movement.

Video tapes of the "VHS" or "BETA" format have a shorter leader than Philips cassettes. In the machines designed to load these cassettes the blocks carrying said supporting surfaces which are conceptually similar to the above description referred to Philips cassettes, are located in front of the access opening of the cassette set in place in the loading station. In addition, said blocks are simultaneously movable close to and away from the front panel of the machine so that, on splicing, the supporting surfaces carrying the tape and leader to be spliced are disposed in vertical alignment relation with the gripper member associated with the adhesive tape supply unit, the latter being disposed behind the cassette being processed.

There are other types of audio and/or video cassettes, that is "VIDEO 8" and "DAT" format cassettes, the leader of which is very short. In particular, the length of the leader is so reduced that it is impossible to utilize the expedient of moving the blocks sideways in order to align them with the gripper member, as described with reference to "VHS" cassettes. Under this situation it is very difficult to set up a cutting and splicing unit capable of operating in such a reduced space resulting from the reduced length of the leader.

A cutting and splicing unit envisaged to work under the above conditions is disclosed in US Patent 4,974,785. In this cutting and splicing unit the second and third supporting surfaces are formed on a second and third blocks respectively, that are movable independently of each other close to and apart from the first block, fastened to the front panel very close to the access opening of the cassette being processed. In greater detail, the second block is movable in the longitudinal extension direction of the leader between one position, in which it is close to the first block and a second position in which it is spaced apart from the first block. Located in the gap defined between the first block and second block and spaced apart from the first one is a third block which is movable in a direction perpendicular to the extension of the leader extracted from the cassette. The cutting member in this case too moves through an opening of the front panel in a direction at right angles to the longitudinal extension of the leader.

The adhesive tape supply unit is completely placed behind the front panel of the machine and its gripper member reaches the junction area at the blocks through the opening formed in the panel.

This cutting and splicing unit has proved to be capable of operating even when leaders are very short. However due to its particular construction the magnetic tape to be threaded must be necessarily guided through a rather tortuous way between several idler rollers. It is noted in fact that the tape coming from a control and count unit operatively located downstream of the supply reel, reaches the third block upon passing over a first idler roller and, before reaching the respective third supporting surface, it must practically perform a complete turn around the third block. This condition is very undesirable, in that each element on which the tape is forced to slide represents a possible damaging factor for the tape when the cassette is being loaded. In the connection it should be noted that the tape damaging possibilities are increased due to the high running speed reached by the tape during the threading. Usually this speed can reach and overcome values in the order of forty meters per second.

In addition it is to be noted that the positioning of the adhesive tape supply unit behind the front panel of the machine gives rise to important problems when it is necessary to carry out the replacement of the adhesive tape roll as it has been completely used up. Such problems are very important due to the high automation degree presently required.

In addition it has been found that waiting times necessary to enable the cutting member and picking up member to operatively intervene at subsequent moments adversely affect productivity.

Another cutting and splicing unit disclosed in European Patent No. 0 210 844 exclusively comprises a fixed block the supporting surface of which has a first portion on which the magnetic tape end is held, and a second portion that at the beginning of the operating cycle holds the leading portion of the leader transversely cut by a blade. The leader trailing portion is kept in engagement with an extractor element that, after reaching the same level as the supporting surface in order to lay the leader thereon for enabling it to be cut, goes back to the cassette access opening, moving the trailing portion away from the block thereby enabling the tape to be spliced to said leading portion. At the end of the tape threading operation into the cassette, the extractor element puts the trailing portion again on the block in order to enable it to be spliced to the end portion of the tape previously cut by the blade.

This splicing unit too does not solve the above drawbacks. In fact the magnetic tape is forced to slide on the block during the threading step, the cutting and splicing operations are carried out individually at subsequent times, and the adhesive tape supply unit is necessarily located behind the front panel of the machine.

Document US-A-3,825,461 discloses a cutting and splicing unit provided with a three supporting surfaces formed on a first, a second and a third block respectively. The second and the third blocks are spaced vertically each other, and rigidly carried by a slider which is movable upon command of a cylinder for alternatly and selectively align the support surfaces of the second and third blocks with the support surface of the first fixed block. The support surfaces extends according to horizontal planes which are perpendicular to a vertical plane according to which the access opening of the cassette extends. A cutting blade is mounted on a movable arm which translates through an opening in the front pannel of the machine for slitting the leader tape or use tape extending on the respectively aligned surfaces of the first and second or third blocks. A splicing unit mounted on the front pannel above said blocks, supplies pieces of splicing adhesive tape to a grasping member mounted on the front pannel too. Such a grasping element is vertically movable for applying the piece of adhesive splicing tape joining the ends of the leader tape and use tape carried by the supporting surfaces of the blocks respectively aligned.

However, such an apparatus is conceived for operating with a very long leader tape.

Moreover, no provision is made for avoiding the magnetic tape to slide on the blocks during its winding into the cassette.

Accordingly, the main object of the present invention is to eliminate the problems of the known art by providing a cutting and splicing unit that, while being adapted to operate on very short leaders, is such conceived that it enables the magnetic tape coming from the control and count unit to reach the cassette access opening following a quite rectilinear path without encountering any fixed element on its way.

An object of an embodiment of the invention is to provide a cutting and splicing unit adapted to facilitate the replacement of the out-of-use adhesive tape roll.

A further object of an embodiment of the invention is to provide a cutting and splicing unit capable of reducing down times due to the operating intervention of the cutting means and gripper member, so as to increase the productivity of the loading machine.

The foregoing and further objects that will become more apparent in the course of the present description are substantially attained by a cutting and splicing unit for automatic cassette loading machines, said unit being characterized by the features recited in the characterizing portion of claim 1.

According to the invention, said cutting and splicing unit operates in accordance with a method of loading tape into a cassette which is characterized by the features recited in claim 13.

Further features and advantages of the present invention will be better understood upon consideration of the following detailed description of an illustrative embodiment thereof given by way of non-limiting example, of a cutting and splicing unit for automatic cassette loading machine and method of loading tape carried out by the same, according to the present invention.

The description being given hereinafter in conjunction with the accompanying drawings, given by way of non-limiting example, in which:

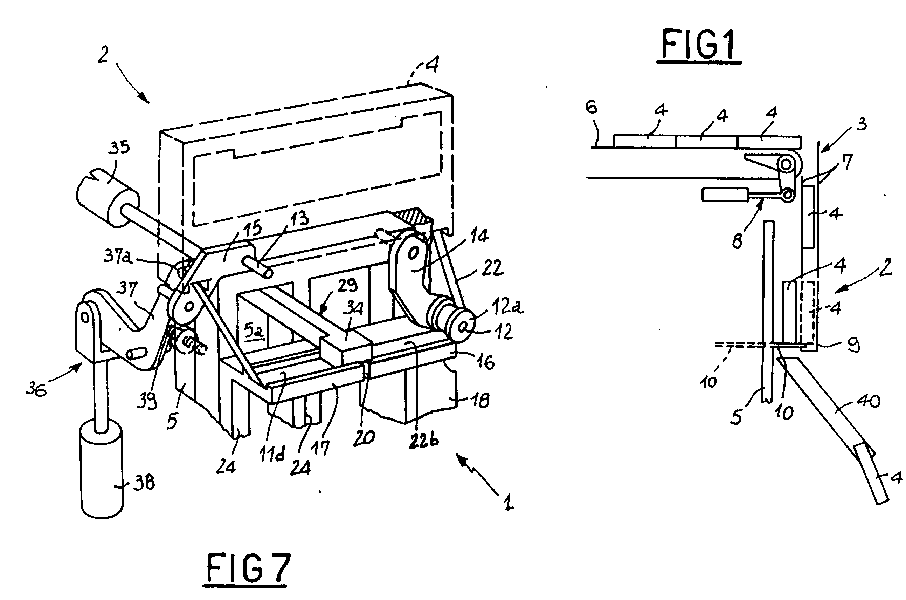

- Fig. 1 is a side diagram showing the path taken by the tape cassettes being processed in an automatic loading machine;
- Fig. 2 is a fragmentary diagrammatic view in perspective of the cutting and splicing unit in question in a condition prior to the beginning of the work cycle;
- Fig. 3 partly shows the cutting and splicing unit during an extraction step of the leader from the cassette being processed;
- Fig. 4 shows a step of the operating cycle following that of Fig. 3, related to the execution of the cutting on the leader and the picking up of a piece of adhesive tape;
- Fig. 5 shows, still in perspective, the application of the adhesive tape for carrying out the splicing between the magnetic tape end and a leading portion of the cut leader;
- Fig. 6 shows a magnetic tape winding step within the cassette;
- Fig. 7 shows the execution of the splicing between an end portion of the magnetic tape and a trailing portion of the cut leader;
- Fig. 8 is a rear perspective view given just as an indication of a tape cassette of the "VIDEO 8" format, its protection door being in an open position.

Referring to the drawings, a cutting and splicing unit for automatic cassette loading machines in accordance with the invention has been generally identified by reference numeral 1

The cutting and splicing unit 1 is operatively located at a loading station 2 being part of an automatic cassette loading machine not shown as a whole as known per se and at all events not of importance to the ends of the invention. In the particular embodiment described and shown the device 1 is conceived for being combined with a loading station 2 of an automatic loading machine of the type described in the Italian Patent Application 21 224 A/90 in the name of the same applicant, to which please refer for further details and information.

Conventionally, associated with the loading station 2 is guide and positioning means 3 arranged to engage, at each operating cycle, all empty tape cassette 4 in order to hold it according to a predetermined positioning before a front panel 5 of the loading machine. In greater detail, cassettes 4 carried by a conveyor belt 6 or equivalent feed media, come close to the upper end of a pair of vertical guides 7 extending before the front panel 5. An overturning mechanism 8 executes the lifting of a cassette 4 at each operating cycle, rotating it through 90° so that said cassette engages in the vertical guides 7. The cassette 4 goes down by drop along the vertical guides 7 and engages in a positioning plate 9 coming in abutment on one or more stop pegs 10 which can be retracted within the front panel 5. Following a translation of the positioning plate 9 in the direction of the front panel 5, the cassette 4 is then brought into engagement relation with centering and winding means operatively disposed in the loading station 2 and not shown as known per se and not of importance to the ends of the invention.

As viewed from Fig. 8. in which a cassette of the "VIDEO 8" format is shown just as an indication, each cassette 4 is provided in known manner with a leader 11 that, in a rest condition, extends before an access opening 4a formed in the cassette. The leader 11 is engaged at the respective opposite ends thereof, to a first and a second winding hubs 11a, 11b rotatably engaged in the cassette 4.

A protection door 4b can be associated with the access opening 4a and, by means known per se and not further described, it is brought to an open condition as a result of the engagement of the cassette 4 in the positioning plate 9 and by effect of the translation of the positioning plate 9 towards the front panel 5.

The foregoing being stated, the cutting and splicing unit 1 comprises extractor means arranged to operatively engage the leader 11 in order to bring it from the previously mentioned rest condition to an extraction condition in which it is extended before the access opening 4a, outside the cassette 4. This extractor means comprises at least a first and a second extractor pins, referenced by 12 and 13 respectively, mounted to respective drive arms 14, 15 pivotally mounted to the front panel 5. By respective actuators operating on the drive arms 14, 15 and not shown as not of importance to the ends of the invention, the first and second extractor pins 12, 13 are movable, individually and selectively, from a rest position in which, following the movement of the positioning plate 9 close to the front panel 5, they enter an access space 4c formed in the cassette 4 at the opening 4a, to all operating position in which they project to the outside of the access opening 4a in order to retain the leader 11 in the extracted condition.

Rotatably associated with at least the first extractor pin 12 is an idler roller 12a, for purposes to be described.

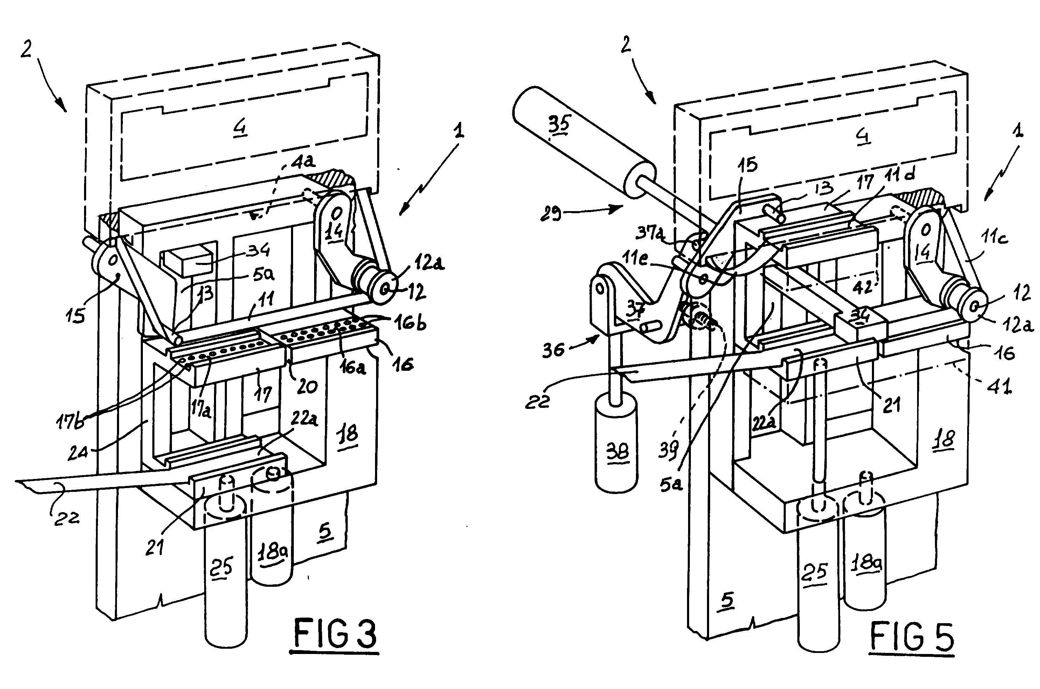

As can be viewed from Fig. 3, the leader 11 in the extracted condition lends itself to be engaged on a first and a second supporting surfaces 16a, 17a respectively defined on first supporting means consisting of a first block 16 integral with a support frame 18 operatively mounted before the front panel 5 and second supporting means consisting of a second block 17 which, in a first operating position, is located close to the first block 16 so that the second supporting surface 17a extends in alignment with the first supporting surface 16a and in coplanar relation therewith.

Under this situation the leader 11 can be cut by first cutting means 19 which, as better shown in the following, acts according to a trajectory at right angles to the longitudinal extension of the leader 11, at a slot 20 defined between the first block 16 and second block 17 in the first operating position.

Due to the action of the cutting member 19 the leader 11 is divided into a first leading portion 11c, connected to the first winding hub 11a, and a trailing portion 11d, connected to the second winding hub 11b.

The ends of the leading and trailing portions 11c, 11d are held on the first and second supporting surfaces 16a and 17a respectively by effect of a suction action conventionally produced through a number of holes 16b, 17b opening into said surfaces.

The second block 17 is movable from the first previously specified position to a second operating position in which it is spaced apart from the first block 16. In particular, the second block 17 in the second operating position is located within the access space 4c defined in the cassette 4.

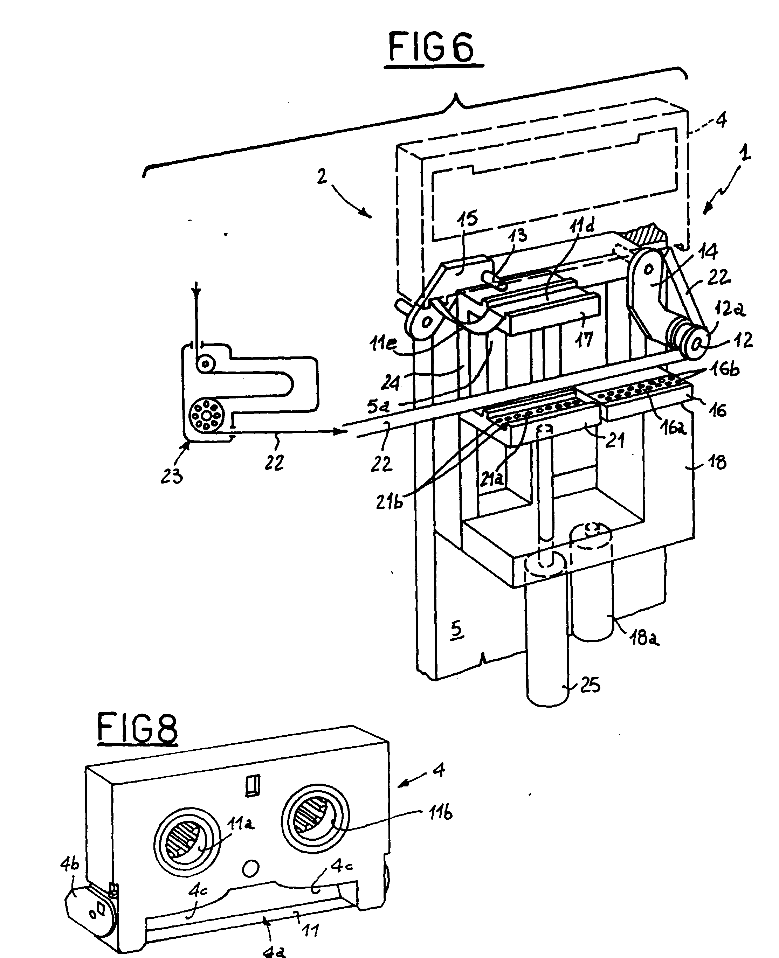

Third supporting means consisting of a third block 21 are also provided and it has a third supporting surface 21a at which, still by effect of suction through holes 21b (see Fig. 6), one end 22a of a magnetic tape 22 from a supply reel (not shown) is retained, after passing through a control and count unit 23 carrying out the measurement of the amount of tape wound in the cassette 4 being processed, as well as the adjustment of the rotational speed of said reel, based on the winding speed of the tape 22.

As diagrammatically shown in Fig. 6, the magnetic tape 22 from the control and count unit 23 advantageously reaches the third block 21 without encountering any idler element or any other type of hindrance on its way.

The third block 21 is movable between one position in which, as shown in Figs. 5, 3 and 4, it is spaced apart from the first block 16, and a second position in which, as shown in Figs. 5 and 6, the third supporting surface 21a thereof is aligned in coplanar relation in the extension of the first supporting surface 16a.

In accordance with the present invention, the second block 17 and third block 21 are disposed in mutual superposed position, so that the second and third supporting surfaces 17a, 21a are disposed parallelly to the first supporting surface 16a and consecutively offset, away from the access opening 4a, in a direction parallel to the front panel 5 and substantially perpendicular to the access opening.

The second and third blocks 17, 21 are rigidly carried by a slider 24, slidably guided with respect to the frame 18 and movable parallelly to the front panel 5 in a direction perpendicular to the access opening 4a of the cassette 4. The movement of the slider 24, controlled by means consisting of a changeover actuator 25 acting between the support frame 18 and the slider, causes the simultaneous translation of the second and third blocks 17, 21 to the respective first and second operating positions.

In accordance with another feature of the present invention, operating between the front panel 5 or other fixed structure of the loading machine, and the frame 18 are means consisting of at least one movement actuator 18a carrying out the simultaneous movement of the first, second and third blocks 16, 17, 21 between a condition in which they are close to the access opening 4a of the cassette 4 and the engagement of the leader 11 on the first and second supporting surfaces 16a, 17a occurs, and a condition in which they are moved away from the access opening, for purposes to be clarified in the following. It should be pointed out that for passing from one of the above conditions to the other a translation of the support frame 18 over some millimeters in a direction parallel to the front panel 5 and perpendicular to the access opening 4a is sufficient.

An adhesive tape supply unit, generally denoted by 26 is preferably associated with the unit 1. This supply unit 26 progressively unwinds an adhesive tape 27, in known manner, from a feed roll 28 and cut it into pieces 27a of predetermined length that are supplied, one by one, to adhesive tape application means 29 that pick them up from the supply unit 26 and apply them to the junction area between the magnetic tape 22 and leader 11, as will be better understood in the following.

In greater detail, the supply unit 26, in known manner, comprises a stepping driving member 30 that, at each operating cycle, causes a piece 27a of predetermined length of adhesive tape 27 to move forward as far as it projects from the driving member itself so that it can be picked up by the application means 29. Acting close to the driving member 30 is a cutting member 31 carrying out the slitting of the piece 27a held by the application means 29 from the adhesive tape 27.

In an original manner, the adhesive tape supply unit 26 is operatively mounted before the front panel 5, in front of the loading station 2. Under this situation the adhesive tape roll 28 can be reached very easily when it is necessary to carry out the replacement thereof.

In the embodiment shown the adhesive tape supply unit 26 is also slidably engaged on a substantially vertical guide bar 32, fastened to the front panel 5. A fluid-operated cylinder 33 enables the supply unit 26 to be moved from an operating condition in which it is disposed substantially at the same level as the first block 16, to a non-use condition in which it is raised with respect to the first block in order to offer access to a handling member provided in the loading machine and designed to automatically cause the engagement of the magnetic tape 22 to the cutting and splicing unit 1 when a new reel is mounted in place of an out-of-use reel. Said handling member is not shown as not of importance to the ends of the present invention and at all events already known from the Italian Patent Application 21, 224 A/90.

In accordance with an embodiment of the invention, the application means 29 comprises arm means consisting of at least one gripper member 34 slidably guided according to a path lying in a plane substantially parallel to the respectively aligned supporting surfaces 16a, 17a, 21a and slightly spaced apart therefrom. In other words, the gripper member 34 is movable in a horizontal direction, at right angles to the front panel 5, through an opening 5a formed therein. The gripper member 34 has the function of retaining the cut away piece 27a of adhesive tape by a suction effect produced in a conventional manner through a hole opening into the lower part of the gripper member.

The gripper member 34 is controlled by first movement means consisting for example of at least one primary fluid-operated actuator 35 operatively disposed behind the front panel 5, said means moving it from a rest position in which it is housed in the opening 5a and therefore retracted with respect to the blocks 16, 17, 21, to a grasping position in which it is disposed close to the supply unit 26 in order to pick up the adhesive tape piece 27a projecting from the driving member 30.

Advantageously and in an original manner, a blade 19a is fixedly and removably connected to the gripper member 34. It projects downwardly with respect to the gripper member and embodies the above mentioned cutting means 19 designed to operate between blocks 16, 17, 21. The primary fluid-operated actuator 35 will operate the cutting means 19 concurrently with the translation of the gripper member 34 from the rest position to the grasping position.

The gripper member 34 is also submitted to the action of second movement means 36 bringing it from the rest position to an application position which is included in the stroke carried out by said gripper member when moving from the rest position to the grasping position.

In the application position the gripper member 34 is disposed above the blocks 16, 17, 21 mutually in side by side relation and faces the supporting surfaces 16a, 17a, 21a which are aligned in coplanar relation, in order to apply the piece 27a of adhesive tape to a junction area between the magnetic tape 22 and the leader 11.

In particular, the second movement means 36 comprises at least one pusher element 37 consisting of a bell crank pivotally mounted behind the front panel 5 according to an axis parallel to the extension plane thereof. The pusher element 37 is movable, upon command of an auxiliary fluid-operated actuator 38, from a position at which it does not interfere with the gripper member 34 and the translation of said gripper member can take place freely from its rest position to its grasping position, to an operating position in which the pusher element 37 acts on a locating seating 37a provided in the gripper member. The action of the pusher element 37 on the locating seating 37a gives rise to the translation of the gripper member 34 to the application position. The application position taken by the gripper member 34 can be advantageously adjusted by a threaded element 39 operatively engaged across the front panel 5 and arranged to abut against the pusher element 37 so as to stop the stroke thereof to the operating position.

Operation of the cutting and splicing unit described above mainly as regards structure, is as follows.

For the sake of completeness, a start condition is assumed at which, following the replacement of an out-of-use supply reel, the magnetic tape 22 coming from the new reel associated with the loading machine must be operatively engaged with the cutting and splicing unit 1.

Under this situation, the supply unit 26 is maintained to a raised position in the condition of non-use, upon the action of the fluid-operated cylinder 33 and the first and second extractor pins 12, 13 are maintained at the respective rest conditions. The movement actuator 18a acting on the frame 18 keeps the blocks 16, 17 and 21 in a position spaced apart from the cassette 4 that may be present in the loading station 2. In addition, the second and third blocks 17, 21 are disposed, upon the action of the changeover actuator 25, in the respective second work positions, so that the third block 21 exhibits its supporting surface 21a in alignment with the supporting surface 16a of the first block 16.

Under this condition, the above mentioned handling member associated with the loading machine, after picking up the magnetic tape 22 end from the supply reel and arranging the tape in engagement with the control and count unit 23, shifts by rectilinear motion from the control and count unit toward the loading station 2, passing over the first and third blocks 16, 21 that are in mutual side by side relation. The magnetic tape 22 is then deposited onto said blocks and operatively engaged to an auxiliary winding member operatively disposed, with reference to the movement of the handling member, downstream of said blocks.

This auxiliary winding member, not shown as known per se and not of importance to the ends of the invention, is designed to wind a predetermined amount (If refuse magnetic tape before the cassette loading cycle begins. At the end (If this winding operation, after the blocks 16, 17, 21 have been raised to the approached condition upon the action of the movement actuator 18a, the suction effect at the first and third supporting surfaces 16a, 21a is activated, which enables the magnetic tape 22 to be held on blocks 16, 21. The movement actuator 18a brings blocks 16, 17, 21 back to the spaced apart condition and the magnetic tape 22 is slit upon the action of the blade 19a, controlled by the primary fluid-operated actuator 35. In known manner, the magnetic tape wound on the auxiliary winding member will be removed from the loading station 2 and therefore disengaged from the first block 16.

At this point, the supply unit 26 is brought back to the operating condition and the changeover actuator 25 brings the second and third blocks 17, 21 to the first operating condition to start the actual loading cycle of cassettes 4.

The extractor pins 12, 13 previously introduced into the access space 4c of the cassette 4, are simultaneously brought from the rest position to the operating position. The leader 11 is therefore extracted from the cassette access opening 4a and laid down before the same on the first and second blocks 16, 17, as shown in Fig. 3.

Concurrently with the extraction of the leader 11, operation of the movement actuator 18a occurs, which brings about the displacement of blocks 16, 17, 21 to a position close to the access opening 4a, so that the first and second supporting surfaces 16a, 17a initially spaced apart from the leader 11, come into contact with said leader and hold it by effect of the suction action produced through holes 16b, 17b.

The second pin 13 is now brought to the rest position and blocks 16, 17, 21 are lowered again so that they are moved apart from the opening 4a, to enable operation of the gripper member 34 and cutting means 19.

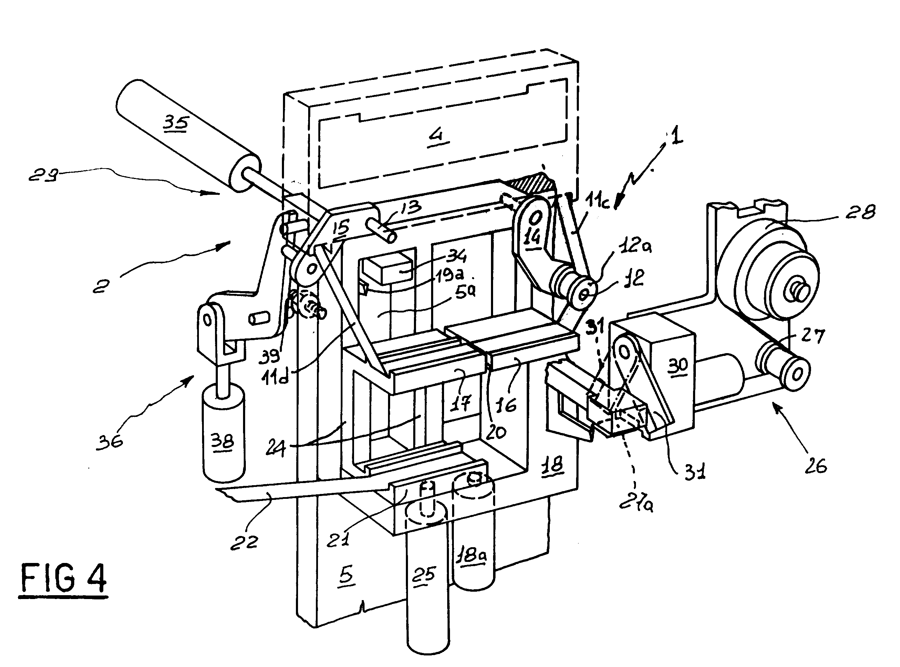

Upon command of the primary fluid-operated actuator 35, the gripper member 34 is brought from the rest postion to the grasping position, as shown in Fig. 4. During this displacement the blade 19a fastened at the lower part thereof to the gripper member 34 enters the slot 20 defined between the first and second blocks 16, 17, causing the leader 11 to be severed into said leading 11c and trailing 11d portions, respectively engaged to the first and second blocks 16, 17.

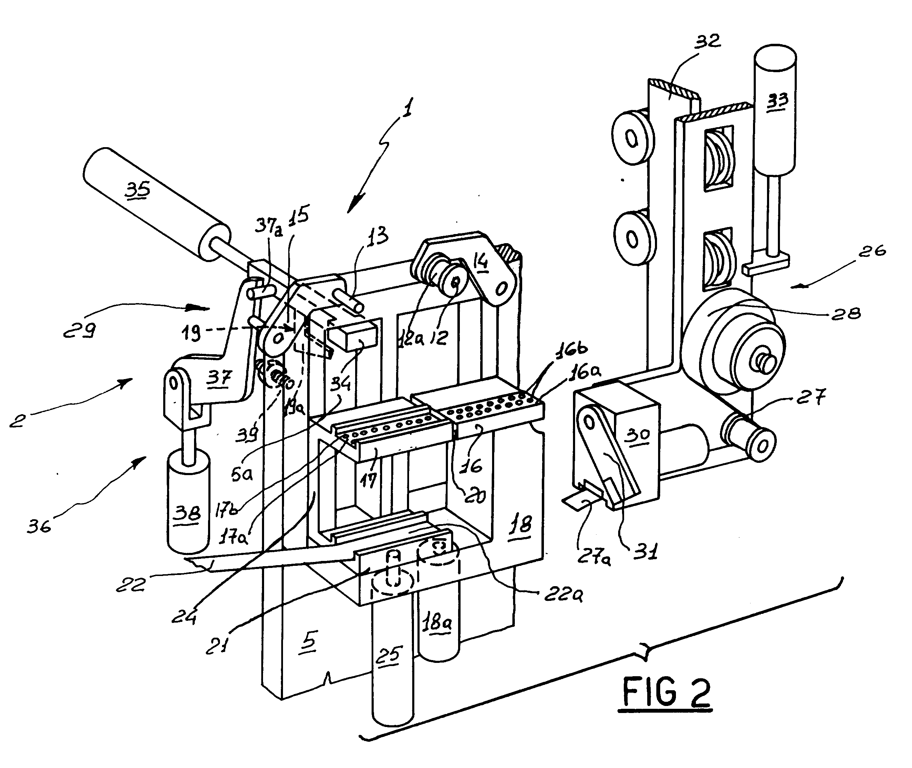

In the grasping position the gripper member 34 is close to the stepping driving member 30 being part of the supply unit 26 and is also located over the adhesive tape piece 27a projecting from the driving member, as shown in Fig. 2. This adhesive tape piece 27a held by effect of suction produced through the hole opening into the lower part of the gripper member 34, is cut by the cutting member 31 and then carried by the gripper member itself which is brought back to the rest position. At this point the changeover actuator 25 moves the second and third blocks 17, 21 to the second operating position so that the third supporting surface 21a, and consequently the magnetic tape end 22a, are brought into alignment with the first supporting surface 16a carrying the leading portion 11c of leader 11, and in coplanar relation therewith. The trailing portion 11d, following the lifting of the second block 17 to the second operating position, forms a curve 11e clearly shown in Figs. 5 and 6.

Under this situation the tape 22 is adapted to be joined to the leading portion 11c of leader 11. To this end the auxiliary actuator 38 is operated and through the pusher element 37 it causes the gripper member 34 to move forward as far as it reaches the application position, that is the position above the junction area between the tape 22 and leader 11.

Upon command of the movement actuator 18a, blocks 16, 17, 21 are raised to the approached condition so that the junction area between the tape 22 and leading portion 11c of leader 11 is brought into contact with the adhesive tape piece 27a held by the gripper member 34, as shown in Fig. 5. The adhesive tape piece 27a is then applied to the magnetic tape 22 and the leading portion 11c that will be therefore integrally joined to each other.

Blocks 16, 17, 21 are lowered again to the condition in which they are spaced apart from the access opening 4a, as shown by chain dot lines 41, 42 in Fig. 5 and the gripper member 34 is brought to the rest position in order to enable the magnetic tape winding step to begin at the inside of the cassette 4. In known manner, this winding operation is carried out by setting in rotation the first winding hub 11a provided in the cassette 4 and connected to the leading portion 11c of the leader 11 by a conventional hub provided in the winding station 2 and arranged in engagement with the cassette winding hub.

As diagrammatically shown in a clear manner in Fig. 6, during the winding step, the magnetic tape 22 coming from the control and count unit 23 reaches the idler roller 12a located on the first extractor pin 12 and kept in the operating condition, without encountering any hindrance along its path. In particular, the magnetic tape 22 will pass over the first and third blocks 16, 21 without touching them, as said blocks have been moved away from the tape as they have been shifted to the spaced apart condition upon command of the movement actuator 18a. The idler roller 12a is therefore the only idler element encountered by the tape 22 before entering the cassette 4.

When the desired amount of magnetic tape 22 has been wound up in the cassette 4, the rotation of the first winding hub 11a is stopped and the movement actuator 18 is operated again in order to cause, by a reciprocating motion, the displacement of blocks 16, 17, 21 to the condition in which they are close to the opening 4a, and their immediate return to the spaced apart condition. Following the approaching of the first and third blocks 16, 21 to the tape 22, the latter is retained on the first and third supporting surfaces 16a, 21a due to the suction effect produced at said surfaces. Therefore the primary actuator 35 is operated and it causes the gripper member 34 to move from the rest position to the grasping position. Simultaneously, the blade 19a passes between the first and third blocks 16, 21 thereby cutting the magnetic tape 22.

In the same manner as above described, a new piece 27a of adhesive tape will be picked up by the gripper member 34 being brought back to the rest condition. Then the changeover actuator 25 brings the first and third blocks 17, 21 to the first operating position. In this way the trailing portion 11d of leader 11 is brought into alignment with the end portion 22b (Fig. 7) of the magnetic tape 22 coming out of the cassette 4.

As shown in Fig. 7, the auxiliary actuator 38 brings the gripper member 34 to the application position in order to cause, following the raising of blocks 16, 17, 21 to the approached condition and subsequent return of same to the spaced apart condition, the application of the adhesive tape piece 27a to the junction area between the trailing portion 11d of the leader and end portion 22b of the magnetic tape 22 located on the first block 16.

The gripper member 34 is brought back to the rest position, and, as a result of a further rotation imparted to the first or second winding hubs 11a, 11b disposed in the cassette 4, the end portion 22b of the tape 22 and trailing portion 11d of the leader 11 are wound within the cassette 4 so that they extend at the access opening 4a.

The cassette 4 can therefore be ejected from the loading station 2, following the displacement of the positioning plate 9 away from the front panel 5. For example, the completely loaded cassette can be dropped onto a chute 90 guiding it to a conveyor belt, not shown, disposed at the base of the loading machine.

The positioning plate 9 thus lends itself to receive into engagement a new cassette 4 to be loaded, so that a new operating cycle begins.

The present invention attains the intended purposes.

The cutting and splicing unit in question lends itself to operate in a satisfactory manner even when the leader provided in the cassettes is of very reduced length. In the connection it should be noted that in the accompanying drawings both the length of the leader and distance between the blocks have been intentionally enlarged for the sake of clarity but, in practice, all members present in the device can operate in a space occupying a few cm³ adjacent the cassette access opening.

In addition, still by virtue of the mutual displacement and operational concept of the blocks designed to support the tape and leader, the invention eliminates any idler element or other element in contact with the magnetic tape entering the cassette. The magnetic tape in fact reaches the only idler roller 12a through a perfectly rectilinear path starting from the control and count unit 23.

Furthermore, the positioning of the adhesive tape supply unit located before the front panel makes the replacement of the out-of-use adhesive tape roll very easy. This aspect too is particularly advantageous, above all if the high degree of automation presently attained by the loading machines for which the splicing unit has been conceived, is taken into account.

It is also to be noted that the association of the cutting means 19 with the gripper member 34 represents an important improvement in terms of structural simplification of the cutting and splicing unit, and on the other hand enables time necessary to carry out the operating cycle by the splicing unit to be remarkably reduced.

Obviously modifications and variations may be made to the invention as conceived, all of them falling within the scope of the invention as defined by the appended claims.

## Claims

1. A cutting and splicing unit for automatic cassette loading machines operating at a loading station (2) provided with guide and positioning means (3) arranged to engage an empty tape cassette (4) at each operating cycle and hold it to a predetermined positioning before a front panel (5) of said loading machine, as well as winding means for winding a predetermined amount of magnetic tape (22) into the cassette (4) held by said guide and positioning means (3), said cutting and splicing unit (1) comprising:
- extractor means (12, 13) arranged to operatively engage a leader (11) having its ends engaged to first (11a) and a second (11b) winding hubs respectively, being part of the cassette (4), in order to bring the leader (11) from a rest condition in which it extends along an access opening (4a) provided in the cassette (4), to an extraction condition in which it is extended before said access opening (4a), outside the cassette;
- cutting means (19) for severing the leader (11) in the extracted condition into a leading portion (11c) connected to the first winding hub (11a), and a trailing portion (lld) connected to the second winding hub (11b);
- a first block (16) disposed before the front panel (5) and arranged to hold the leading portion (11c) of the leader (11) on a first supporting surface (16a);
- a second block (17) disposed before the front panel (5) and arranged to hold the trailing portion (11d) of the leader (11) on a second supporting surface (17a), said second block (17) being movable between a first position in which the second supporting surface (17a) is aligned substantially in the extension of the first supporting surface (16a), in coplanar relation therewith, and a second position in which the second block (17) is spaced apart from the first block (16);
- a third block (21) disposed before the front panel (5) and arranged to hold an end (22a) of a magnetic tape (22) from a supply reel on a third supporting surface (21a), said third block (21) being movable between one position in which it is spaced apart from the first block (16) and a second position in which the third supporting surface (21a) is substantially aligned in the extension of the first supporting surface (16a) in coplanar relation therewith;
- a slider (24) rigidly carrying said second and third blocks (17, 21), said blocks exhibiting the second and third supporting surfaces (17a, 21a) disposed parallelly to the first supporting surface (16a) and consecutively offset in a direction parallel to the front panel (5);
- a support frame (18) slidably engaging the slider (24);
- a changeover actuator (25) acting between the support frame (18) and the slider (24) in order to carry out the displacement, through said slider, of the second and third blocks (17, 21) between the respective first and second positions;
characterized in that it further comprises a movement actuator (18a) operating on said support frame (18) to simultaneously shift the first (16), second (17) and third (21) blocks between a condition in which the engagement of the leader (11) on said first and second supporting surfaces (16a, 17a) takes place, and a condition in which the magnetic tape (22) being wound into the cassette (4) is spaced apart from said third and first supporting surfaces (21a,16a) and splicing tape applicator means (29) to affix splicing tape (27) to pieces of magnetic tape (22a,22b) supported on said first and second blocks (16,17) or said first and third blocks (16,21).

2. A unit according to claim 1, wherein the support frame (18) slidably engages the slider (24) in a direction substantially perpendicular to the cassette access opening (4a).

3. A unit according to claim 1, characterized in that said extractor means comprises at least a first (12) and a second (13) extractor pins invidivually and selectively movable from a rest position in which they are housed in an access space (4c) formed along said access opening (4a), to an operating position in which they project to the outside of the access opening (4a) in order to hold the leader (11) ) in the extracted condition.

4. A unit according to claim 3, characterized in that rotatably associated with said first extractor pin (12) arranged to engage the leading portion (11c) of the leader (11), is an idler roller (12a) designed to guide the magnetic tape (22) towards the inside of the cassette (4) being loaded.

5. A unit according to claim 1, wherein provision is made for:
- an adhesive tape supply unit (26) arranged to supply and cut an adhesive tape (27) into pieces (27a) of predetermined length;
- the tape applying means (29) individually picking up the pieces (27a) of adhesive tape (27) supplied by the supply unit (26) and apply them onto a junction area between the magnetic tape (22) and the leader (11), at said blocks (16, 17, 21),
said application means (29) comprising:
- at least one gripper member (34) arranged to removably engage the piece (27a) of adhesive tape (27) supplied from the supply unit (26), said gripper member (34) being slidably guided in a path lying in a plane substantially parallel to and slightly spaced apart from said supporting surfaces (16a, 17a, 21a) aligned in coplanar relation;
- first movement means (35) operating on the gripper member (34) for shifting it from a rest position in which it is retracted with respect to said blocks (16, 17, 21), and a grasping position in which it is disposed close to the supply unit (26) for picking up said piece (27a) of adhesive tape (27);
- second movement means (36) operating on the gripper member (34) for bringing it from said rest position to an application position in which said gripper member (34) faces said supporting surfaces (16a, 17a, 21a) aligned in coplanar relation, in order to apply the piece (27a) of adhesive tape (27) to a junction area between said magnetic tape (22) and leader (11).

6. A unit according to claim 5, characterized in that said adhesive tape supply unit (26) is mounted before the loading machine front panel (5), said application position being included in the stroke travelled by the gripper member (34) when shifting between the rest position and the grasping position.

7. A unit according to claim 6, characterized in that said first movement means comprises at least one primary fluid-operated actuator (35) operatively disposed behind the front panel (5).

8. A unit according to claim 6, characterized in that said second movement means (36) comprises at least one pusher element (37) movable, upon command of an auxiliary fluid-operated actuator (38) from a position in which it does not interfere with the gripper member (34) to an operating position in which it acts on a locating seating (37a) carried by the gripper member (34) in order to bring it to the application position.

9. A unit according to claim 8, characterized in that it further comprises at least one threaded adjustment element (39) operatively engaged across the front panel (5) and arranged to act in abutment against the pusher element (37) in order to stop the stroke thereof to the operating position.

10. A unit according to claim 5, characterized in that the gripper member (34), in its application position, is arranged for applying the adhesive tape piece (27a) to the junction area between said magnetic tape (22) and leader (11), following the movement of said blocks (16, 17, 21) from the spaced apart condition to the approached condition with respect to the cassette access opening (4a).

11. A unit according to claim 6, characterized in that said cutting means (19) comprises at least one blade (19a) fastened to the gripper member (34) and arranged to pass between the mutually approached blocks (16,17, 21) when the gripper moves between the rest and grasping positions.

12. A unit according to claim 5, characterized in that said adhesive tape supply unit (26) located before the front panel (5) is movable between a use position in which it is disposed substantially at the same level as the first block (16) and a non-use position in which it is raised from the first block.

13. A method of loading tape into a cassette carried out by the unit of any of claims 1-12 comprising the following steps:
- engaging a magnetic tape (22) on the third tape support block (21);
- extracting the leader tape (11) from the cassette (4);
- engaging said extracted leader tape (11) on the first and the second support blocks (16, 17);
- slitting said extracted leader tape (11) between said first and second support block (16, 17);
- shifting said second and third support blocks (17, 21) to align said magnetic tape (22) on said third support block (21) with leader tape (11) on said first support block (16);
- affixing a piece of splicing tape (27a) joining said use tape (22) and leader tape (11);
- winding magnetic tape (22) into the cassette (4);
- slitting said magnetic tape (22) between said first and third support blocks (16, 21);
- shifting said second and third support blocks (17, 21) to align the magnetic tape (22) on said first support block (16) with the leader tape (11) on said second support block (17);
- affixing a piece of splicing tape (27a) joining the use tape (22) and leader tape (11); and
each of said affixing steps being carried out by moving:
- said first, second and third support blocks (16, 17, 21) from a spaced apart condition to an approaching condition to the cassette (4) to bring said aligned magnetic tape (22) and leader tape (11) into engagement with the adhesive tape application means (29);
- moving said first, second and third support blocks (16, 17, 21) from the approaching condition to the spaced apart condition.

14. A method according to claim 13 wherein said engaging steps is achieved by:
- shifting said first, second and third support blocks (16, 17, 21) from said spaced apart condition to said approaching condition to the cassette (4) to engage the extracted leader tape (11) on said first and second support blocks (16, 17); and
- shifting said first, second and third support blocks (16, 17, 21) from said approaching condition to said spaced apart condition from the cassette (4).

15. A method according to claim 13 comprising the additional steps of:
- moving said adhesive tape application means (29) from a rest position to an extraction position;
- cutting a piece of splicing tape (27a) fed by splicing tape feed means (26);
- engaging said cut piece of splicing tape (27a) on said adhesive tape application means (29);
- moving said tape applicator means (29) from said extraction condition to said rest condition;
- moving said adhesive tape application means (29) to an application position in which it faces said first (16) and second or third support blocks (17, 21) carrying aligned magnetic tape (22) and leader tape (11) to apply said cut piece of splicing tape (27a) thereby joining said magnetic tape (22) and leader tape (11).

16. A method according to claim 15, wherein each of said slitting steps is achieved concurrently with said step of moving said adhesive tape application means (29) from the rest position to the grasping position, upon action of first cutting means (19) carried by said tape applicator means (29).

17. A method according to claim 13, wherein the shifting of said second and third support blocks (17, 21) and the moving of said first, second and third blocks (16, 17, 21) occur along a common plane.

18. A method according to claim 17, wherein said common plane is a vertical plane along the face of a machine (5) with which said support blocks (16, 17, 21) are operatively associated.

## Patentansprüche

1. Einheit zum Schneiden und Verbinden für automatische Kassettenladegeräte, im Bereich einer Ladestation (2) mit Führungs- und Positioniermitteln (3), die bei jedem Arbeitsablauf dazu bereitgestellt sind, eine leere Bandkassette (4) zu erfassen, um sie gemäß einer vorgegebenen Positionierung vor einer Stirnplatte (5) des Ladegerätes zurückzuhalten, sowie mit Aufwickelmitteln, um eine vorgegebene Magnetbandmenge (22) in die durch die Führungs- und Positioniermittel (3) gehaltenen Kassette (4) zu laden, wobei die Einheit zum Schneiden und Verbinden (1) umfaßt:
- Auszugsmittel (12, 13), die dazu bereitgestellt sind, wirksam einen bandförmigen Einsatz (11) zu erfassen, der die eigenen Enden jeweils an einem ersten (11a) und einem zweiten (11b) Aufwickelkern in Eingriff hat, die der Kassette angehören (4), um den bandförmigen Einsatz (11) von einer Ruhestellung, in der er sich längs der von der Kassette (4) aufgewiesenen Zugangsöffnung (4a) erstreckt, in eine AuszugsStellung zu bringen, in der er vor der Zugangsöffnung (4a) außerhalb der Kassette liegt;
- Schneidmittel (19), um den bandförmigen Einsatz (11) im Auszugszustand in einen mit dem ersten Aufwickelkern (lla) verbundenen Kopfabschnitt (11c) und einen mit dem zweiten Aufwickelkern (11b) verbundenen Schwanzabschnitt (11d) zu trennen;
- einen ersten Klotz (16), der vor der Stirnplatte (5) angeordnet und dazu bereitgestellt ist, den Kopfabschnitt (11c) des bandförmigen Einsatzes (11) auf einer ersten Auflagefläche (16a) zu halten;
- einen zweiten Klotz /17), der vor der Stirnplatte (5) angeordnet und dazu bereitgestellt ist, den Schwanzabschnitt (11d) des bandförmigen Einsatzes (11) auf einer zweiten Auflageebene (17a) zu halten, wobei der zweite Klotz (17) zwischen einer ersten Stellung, in der die zweite Auflagefläche (17a) im wesentlichen auf der Verlängerung der ersten Auflagefläche (16a) koplanar ausgerichtet ist, und einer zweiten Stellung beweglich ist, in der der zweite Klotz (17) vom ersten Klotz (16) beabstandet ist;
- einen dritten Klotz (21), der vor der Stirnplatte (5) angeordnet und dazu bereitgestellt ist, auf einer dritten Auflagefläche (21a) einen Anfang (22a) eines Magnetbandes (22) zu halten, das von einer Zuführrolle stammt, wobei der dritte Klotz (21) zwischen einer ersten Stellung, in der er vom ersten Klotz (16) beabstandet ist, und einer zweiten Stellung beweglich ist, in der die dritte Auflagefläche (21a) im wesentlichen auf der Verlängerung der ersten Auflagefläche (16a) koplanar ausgerichtet ist;
- einen Gleitschlitten (24), der den zweiten und den dritten Klotz (17, 21) starr trägt, wobei diese letzteren die zweite und die dritte Auflagefläche (17a, 21a) gegenüber der ersten Auflagefläche (16a) parallel angeordnet und nacheinander gemäß einer zur Stirnplatte (5) parallelen Richtung aufweist;
- ein Traggerüst (18), das den Schlitten (24) gleitbar aufnimmt;
- eine Wechseleinrichtung (25), die zwischen dem Traggerüst (18) und dem Gleitschlitten (24) wirkt, um über diesen letzteren den zweiten und den dritten Klotz (17, 21) zwischen der entsprechenden ersten und zweiten Stellung zu verstellen;
dadurch gekennzeichnet, daß sie überdies einen Antrieb (18a) umfaßt, der auf das Gerüst (8) wirkt, um gleichzeitig den ersten (16), den zweiten (17) und den dritten Klotz (21) zwischen einer Lage, in der der Angriff des bandförmigen Einsatzes (11) auf der ersten und der zweiten Auflagefläche (16a, 17a) bewirkt wird, und einer Lage zu bewegen, in der das Magnetband (22) beim Aufwickelschritt in der Kassette (4) von der dritten und der ersten Auflagefläche (21a, 16a) beabstandet ist; und
Mittel zur Anbringung eines Verbindungs- bzw. Klebebandes (29) um das Klebe- bzw. Verbindungsband (27) an Abschnitten des Magnetbandes (22a, 22b) zu befestigen, die auf dem ersten und dem zweiten Klotz (16, 17) oder auf dem ersten und dem dritten Klotz (16, 21) liegen.

2. Einheit nach Anspruch 1, dadurch gekennzeichnet, daß das Gerüst (18) die Gleitführung (24) in einer im wesentlichen zur Zugangsöffnung (4a) der Kassette senkrechten Richtung gleitbar aufnimmt.

3. Einheit nach Anspruch 1, dadurch gekennzeichnet, daß die Auszugsmittel mindestens einen ersten (12) und einen zweiten (13) Auszugsbolzen umfassen, die einzeln und wahlweise von einer Ruhestellung, in der sie in einer längs der Zugangsöffnung (4a) ausgearbeiteten Zugangslücke (4c) aufgenommen sind, und einer Arbeitsstellung beweglich sind, in der sie aus der Zugangsöffnung (4a) nach außen vorspringen, um den bandförmigen Einsatz in der Auszugslage zu halten.

4. Einheit nach Anspruch 3, dadurch gekennzeichnet, daß dem ersten, zur Ergreifung des Endabschnittes (11c) des bandförmigen Einsatzes (11) bereitgestellte Auszugsbolzen (12) eine Umlenkrolle (12a) drehbar zugeordnet ist, die dazu bereitgestellt ist, das Magnetband (22) in Richtung des Inneren der Kassette (4) beim Aufwickelschritt zu führen.

5. Einheit nach Anspruch 1, dadurch gekennzeichnet, daß
- eine Klebebandzuführeinheit (26) vorgesehen ist, die dazu bereitgestellt ist, ein Klebeband (27) in der Form von Abschnitten (27a) vorgegebener Länge zu liefern und zu schneiden;
- wobei die Bandanbringungsmittel (29) einzeln die von der Zuführeinheit (27) gelieferten Abschnitte (27a) des Klebebandes (27) abnehmen und sie in einem Verbindungsbereich zwischen dem Magnetband (22) und dem bandförmigen Einsatz (11) im Bereich der Klötze (16, 17, 21) anbringen;
wobei die Anbringungsmittel (29) umfassen:
- mindestens einen Greifer (34), der den von der Zuführeinheit (26) gelieferten Abschnitt (27a) des Klebebandes (27) ergreift, wobei der Greifer (34) gemäß einer Laufbahn gleitbar geführt ist, die in einer gegenüber den koplanar ausgerichteten Auflageebenen (16a, 17a, 21a) im wesentlichen parallelen und leicht beabstandeten Ebene liegt;
- erste Antriebsmittel (35), die auf den Greifer (34) wirken, um ihn zwischen einer Ruhestellung, in der er gegenüber den Blöcken (16, 17, 21) zurückgezogen ist, und einer Greifstellung zu verstellen, in der er im Bereich der Zuführeinheit (26) angeordnet ist, um den Abschnitt (27a) des Klebebandes (27) abzunehmen;
- zweite Antriebsmittel (36), die auf den Greifer (34) wirken, um ihn von der Ruhestellung in eine Anbringungsstellung zu bringen, in der der Greifer (34) in Richtung der koplanar ausgerichteten Auflageflächen (16a, 17a, 21a) gegenüberliegt, um den Abschnitt (27a) des Klebebandes (27) in einem Verbindungsbereich zwischen dem Magnetband (22) und dem bandförmigen Einsatz (11) anzubringen.

6. Einheit nach Anspruch 5, dadurch gekennzeichnet, daß die Klebebandzuführeinheit (26) vor der Stirnplatte (5) des Ladegerätes angebracht ist, wobei die Anbringungsstellung im vom Greifer (34) durchgeführten Weglauf bei der Verstellung zwischen der Ruhestellung und der Greifstellung liegt.

7. Einheit nach Anspruch 6, dadurch gekennzeichnet, daß die ersten Antriebsmittel mindestens einen fluidodynamischen Hauptarbeitszylinder (35) umfassen, der hinter der Stirnplatte (5) wirksam angeordnet ist.

8. Einheit nach Anspruch 6, dadurch gekennzeichnet, daß die zweiten Antriebsmittel (36) mindestens ein bewegliches Schubelement (37) umfassen, das bei Betätigung eines fluidodynamischen Hilfszylinders (38) von einer mit dem Greifer (34) nicht in Eingriff stehenden Stellung in eine Arbeitsstellung beweglich ist, in der es auf einen Anschlagsitz (37a) wirkt, der vom Greifer (34) getragen wird, um ihn in die Anbringungsstellung zu bringen.

9. Einheit nach Anspruch 8, dadurch gekennzeichnet, daß sie überdies mindestens ein Gewindeeinstellelement (39) umfaßt, das über die Stirnseite (5) wirksam in Eingriff steht und dazu bereitgestellt ist, gegen das Schubelement (37) anzuschlagen, um dessen Hub in der Arbeitsstellung anzuhalten.

10. Einheit nach Anspruch 5, dadurch gekennzeichnet, daß der Greifer (34) in seiner Anbringungsstellung, in der der Greifer den Klebebandabschnitt (27a) am Verbindungsbereich zwischen dem Magnetband (22) und dem bandförmigen Einsatz (11) anbringt, zufolge der Bewegung der Klötze (16, 17, 21) von einer entfernten Lage in die der Zugangsöffnung (4a) der Kassette angenäherten Lage beweglich ist.

11. Einheit nach Anspruch 6, dadurch gekennzeichnet, daß die Schneidmittel (19) mindestens ein am Greifer (34) befestigtes Messer umfassen, das zwischen den zueinander angenäherten Klötzen (16, 17, 21) verstellbar ist, wenn der Greifer selbst zwischen der Ruhestellung und der Greifstellung verstellt wird.

12. Einheit nach Anspruch 5, dadurch gekennzeichnet, daß die vor der Stirnplatte (5) angeordnete Klebebandzuführeinheit (26) zwischen einer Verwendungsstellung, in der sie im wesentlichen auf der Höhe des ersten Klotzes (16) liegt, und einer Nichtverwendungsstellung verstellbar ist, in der sie gegenüber dem ersten Klotz selbst angehoben ist.

13. Verfahren zum Laden einer Kassette mit einem Magnetband, ausgeführt von der Einheit gemäß einem beliebigen Anspruch von 1 bis 12, umfassend die folgenden Arbeitsschritte:
- Ergreifen eines Magnetbandes (22) am dritten Bandtragklotz (21);
- Auszug des bandförmigen Einsatzes (11) aus der Kassette (4);
- Ergreifen des ausgezogenen, bandförmigen Einsatzes (11) am ersten und am zweiten Tragklotz (16, 17);
- Abschneiden des ausgezogenen, bandförmigen Einsatzes (11) zwischen dem ersten und dem zweiten Tragklotz (16, 17);
- Verstellung des zweiten und des dritten Tragklotzes (17, 21), um das am dritten Tragklotz (21) gelegene Magnetband (22) mit dem am ersten Tragklotz (16) gelegenen, bandförmigen Einsatz in Ausrichtung zu bringen;
- Befestigung eines Verbindungsklebebandabschnittes (27a), der das Klebeband (22) und den bandförmigen Einsatz (11) verbindet;
- Aufwickeln des Magnetbandes (22) in der Kassette (4);
- Abschneiden des Magnetbandes (22) zwischen dem ersten und dem dritten Tragklotz (17, 21);
- Verstellung des zweiten und des dritten Tragklotzes (17, 21), um das Magnetband (22) am ersten Tragklotz (16) mit dem bandförmigen Einsatz (11) am zweiten Tragklotz (17) auszurichten;
- Befestigung eines Verbindungsklebebandabschnittes (27a), das das Magnetband (22) und den Bandförmigen Einsatz (11) verbindet;
wobei jeder der Befestigungsschritte ausgeführt wird, indem:
- die ersten, zweiten und dritten Tragklötze (16, 17, 21) von einer beabstandeten Lage in eine der Kassette (4) angenäherten Lage bewegt werden, um das ausgerichtete Magnetband (22) und den bandförmigen Einsatz (11) mit den Klebebandanweduhgsmittelm (29) in Eingriff zu bringen;
- Verstellung der ersten, zweiten und dritten Tragklötze (16, 17, 21) von der angenäherten Lage in die entfernte Lage.

14. Verfahren nach Anspruch 13, wobei der Eingriffsschritt erhalten wird durch:
- Verstellung des ersten, zweiten und dritten Tragklotzes (16, 17, 21) von der entfernten Lage in die der Kassette (4) angenäherten Lage, um den ausgezogenen bandförmigen Einsatz (11) am ersten und zweiten Tragklotz (16, 17) in Eingriff zu bringen; und
- Verstellung des ersten, des zweiten und des dritten Tragklotzes (16, 17, 21) von der angenäherten Lage in die von der Kassette (4) entfernten Lage.

15. Verfahren nach Anspruch 13, erfassend die weiteren Arbeitsschritte:
- Verstellung der Klebebandanwendungsmittel (29) von einer Ruhestellung in eine Auszugsstellung;
- Abschneiden eines von den Verbindungsklebebandzuführmitteln zugeführten Abschnittes (27a) eines Verbindungsklebebandes;
- Ineingriffbringen des abgeschnittenen Verbindungsklebebandabschnittes (27a) an den Klebebandanwendungsmitteln (29);
- Verstellung der Klebebandanwendungsmittel (29) von der Auszugslage in die Ruhelage;
- Verstellung der Klebebandanwendungsmittel (29) in eine Verwendungsstellung, in der sie dem ersten (16) und dem zweiten oder dritten Tragklotz (17, 21) gegenüberliegen, die den zueinander ausgerichteten bandförmigen Einsatz (11) und das Magnetband (22) tragen, um den abgeschnittenen Verbindungsklebebandabschnitt (27a) anzubringen, wobei so das Magnetband (22) und der bandförmige Einsatz (11) verbunden werden.

16. Verfahren nach Anspruch 15, bei dem jeder der Schneidarbeitsschritte zusammen mit dem Antriebsarbeitsschritt der Klebebandanwendungsmittel (29) von der Ruhestellung in die Greifstellung durch Einwirkung der von den Klebebandanbringungsmitteln (29) getragenen ersten Schneidmitteln (19) ausgeführt wird.

17. Verfahren nach Anspruch 13, dadurch gekennzeichnet, daß die Verstellung des zweiten und des dritten Tragklotzes (17, 21) und die Verstellung des ersten, zweiten und dritten Tragklotzes (16, 16, 21) längs einer gemeinsamen Ebene erfolgt.

18. Verfahren nach Anspruch 17, dadurch gekennzeichnet, daß die gemeinsame Ebene eine längs der Vorderseite eines Gerätes (5) senkrechte Ebene ist, der die Tragklötze (16, 17, 21) zugeordnet sind.

## Revendications

1. Unité de découpage et soudage pour des appareils de chargement automatique de cassettes opérant à un poste de chargement (2) pourvu de moyens de guidage et de mise en place (3) arrangés de manière à engager, lors de chaque cycle de travail, une cassette vide (4) destinée à contenir une bande et à la retenir à une position prédéterminée devant un panneau de face (5) de ladite machine de chargement, et des moyens d'enroulement pour enrouler une quantité prédéterminée de bande magnétique (22) dans la cassette (4) retenue par lesdits moyens de guidage et mise en place (3), ladite unité de découpage et soudage (1) comprenant:
- des moyens extracteurs (12, 13) destinés à engager de manière opératoire une pièce insérée en forme de ruban ou amorce (11) ayant ses extrémités fixées respectivement à un premier (11a) et un deuxième (11b) moyeux d'enroulement faisant partie de la cassette (3), en vue d'amener l'amorce (11) d'une condition de repos dans laquelle elle s'étend le long d'une ouverture d'accès (4a) prévue dans la cassette (4), à une condition d'extraction dans laquelle elle s'étend devant ladite ouverture d'accès (4a) à l'extérieur de la cassette;
- des moyens de découpage (19) pour découper l'amorce (11) en condition d'extraction en une portion de début (11c) reliée au premier moyeu d'enroulement (11a), et une portion de fin (11d) reliée au deuxième moyeu d'enroulement (11b);
- un premier bloc (16) disposé devant le panneau de face (5) et destiné à retenir la portion de début (11c) de l'armorce (11) sur une première surface d'appui (16a);
- un deuxième bloc (17) disposé devant le panneau de face (5) et destiné à retenir la portion de fin (11d) de l'amorce (11) sur une deuxième surface d'appui (17a), ledit deuxième bloc (17) étant mobile entre une première position à laquelle la deuxième surface d'appui (17a) est sensiblement alignée, de manière coplanaire, dans le prolongement de la première surface d'appui (16a), et une deuxième position à laquelle le deuxième bloc (17) est espacé du premier bloc (16);
- un trosième bloc (21) disposé devant le panneau de face (5) et destiné à retenir une extrémité (22a) d'une bande magnétique (22) en provenance d'une bobine d'approvisionnement (21) sur une troisième surface d'appui (21a), ledit troisième bloc (21) étant mobile entre une première position à laquelle il est espacé du premier bloc (16) et une deuxième position à laquelle la troisième surface d'appui (21a) est sensiblement alignée, de manière coplanaire, sur le prolongement de la première surface d'appui (16a);
- une glissière (24) portant de manière rigide lesdits deuxième et troisième blocs (17, 21), lesdits blocs présentant les deuxième et troisième surfaces d'appui (17a, 21a) disposées parallèlement à la première surface d'appui (16a) et consécutivement décalées dans une direction parallèle au panneau de face (5);
- un bâti support (18) engageant la glissière (24) de manière coulissante;
- un actionneur de remplacement (25) agissant entre le bâti support (18) et la glissière (24) pour effectuer le déplacement, à travers ladite glissière, des deuxième et troisième blocs (17, 21) entre les respectives première et deuxième positions;
caractérisée en ce qu'elle comporte en outre un actionneur de mise en mouvement (18a) opérant sur ledit bâti support (18) pour déplacer simultanément les premier (16), deuxième (17) et troisième (21) blocs entre une condition dans laquelle il y a l'engagement de l'amorce (11) sur lesdites première et deuxième surfaces d'appui (16a, 17a) et une condition dans laquelle la bande magnétique (22) en cours d'enroulement dans la cassette (4) est écartée desdites troisième et première surfaces d'appui (21a, 16a), et des moyens applicateurs de bande de soudage (29) pour attacher la bande adhésive ou de soudage (27) à des pièces de bande magnétiques (22a, 22b) supportées sur lesdits premier et deuxième blocs (16, 17) ou lesdits premier et troisième blocs (16, 21).

2. Unité selon la revendication 1, dans laquelle ledit bâti support (18) engage de manière coulissante la glissière (24) dans une direction sensiblement perpendiculaire à l'ouverture d'accès de la cassette (4a).

3. Unité selon la revendication 1, caractérisée en ce que lesdits moyens extracteurs comportent au moins un premier (12) et un deuxième (13) tétons d'extraction mobiles individuellement et sélectivement d'une position de repos à laquelle ils sont logés dans un espace d'accès (4c) formé le long de ladite ouverture d'accès (4a), à une position de travail à laquelle ils font saillie à l'extérieur de l'ouverture d'accès (4a) dans le but de retenir l'amorce (11) à sa condition d'extraction.

4. Unité selon la revendication 3, caractérisée en ce qu'un galet de renvoi (12a) destiné à guider la bande magnétique (22) vers l'intérieur de la cassette (4) en cours de chargement est associé rotativement audit premier téton d'extraction (12) destiné à engager la portion de début (11c) de l'amorce (11).

5. Unité selon la revendication 1, dans laquelle on prévoit:
- une unité d'approvisionnement en bande adhésive (26) destinée à approvisionner une bande adhésive (27) et à la découper en pièces (27a) de longueur prédéterminée;
- les moyens applicateurs de bande (29) qui saisissent individuellement les pièces (27a) de bande adhésive (27) fournies par l'unité d'approvisionnement (26) et les appliquent à une zone de jonction entre la bande magnétique (22) et l'amorce (11), en correspondance avec lesdits blocs (16, 17, 21),
lesdits moyens applicateurs (29) comportant:
- au moins un organe pinceur (34) destiné à engager de manière amovible la pièce (27a) de bande adhésive (27) fournie par l'unité d'approvisionnement (26), ledit organe pinceur (34) étant guidé de manière coulissante selon un parcours qui est disposé dans un plan sensiblement parallèle auxdites surfaces d'appui (16a, 17a, 21a) alignées de manière coplanaire, et légèrement espacé de celles-ci;
- des premiers moyens de mise en mouvement (35) opérant sur l'organe pinceur (34) pour le déplacer d'une position de repos à laquelle il est rétracté par rapport audits blocs (16, 17, 21) et une position de préhension à laquelle il est disposé proche de l'unité d'approvisionnement (26) pour saisir ladite pièce (27a) de bande adhésive (27);
- des deuxièmes moyens de mise en mouvement (36) opérant sur l'organe pinceur (34) pour l'amener de ladite position de repos à une position d'application à laquelle ledit organe pinceur (34) est en regard desdites surfaces d'appui (16a, 17a, 21a) alignées de manière coplanaire, dans le but d'appliquer la pièce (27a) de bande adhésive (27) à une zone de jonction entre ladite bande magnétique (22) et l'amorce (11).

6. Unité selon la revendication 5, caractérisée en ce que ladite unité d'approvisionnement en bande adhésive (26) est montée devant le panneau de face (5) de la machine de chargement, ladite position d'application étant comprise dans la course effectuée par l'organe pinceur (34) quand il se déplace entre la position de repos et la position de préhension.

7. Unité selon la revendication 6, caractérisée en ce que lesdits premiers moyens de mise en mouvement comportent au moins un actionneur hydraulique primaire (35) disposé pour son fonctionnement derrière le panneau de face (5).

8. Unité selon la revendication 6, caractérisée en ce que lesdits deuxièmes moyens de mise en mouvement (36) comportent au moins un élément de poussée (37) mobile, sur commande d'un actionneur hydraulique auxiliaire (38), d'une position à laquelle il n'interfère pas avec l'organe pinceur (34) à une position de travail à laquelle il agit sur un siège de butée (37a) porté par l'organe pinceur (34) en vue de l'amener à la position d'application.

9. Unité selon la revendication 8, caractérisée en ce qu'elle comporte en outre au moins un élément de réglage fileté (39) engagé de manière opératoire à travers le panneau de face (5) et destiné à agir en butée contre l'élément de poussée (37) dans le but d'arrêter sa course vers la position de travail.

10. Unité selon la revendication 5, caractérisée en ce que l'organe pinceur (34), dans sa position d'application, est disposé de manière à appliquer la pièce de bande adhésive (27a) à la zone de jonction entre ladite bande magnétique (22) et l'amorce (11), à la suite du mouvement desdits blocs (16, 17, 21) de la condition écartée à la condition rapprochée de l'ouverture d'accès de la cassette (4a).

11. Unité selon la revendication 6, caractérisée en ce que lesdits moyens de découpage (19) comportent au moins une lame (19a) fixée à l'organe pinceur (34) et disposée de manière à passer entre les blocs réciproquement rapprochés (16, 17, 21) quand l'élément pinceur se déplace entre la position de repos et la position de préhension.

12. Unité selon la revendication 5, caractérisée ne ce que ladite unité d'approvisionnement en bande adhésive (26) située devant le panneau de face (5) est mobile entre une position d'usage à laquelle elle est disposée sensiblement au même niveau que le premier bloc (16) et une position de non usage à laquelle elle est relevée du premier bloc.

13. Méthode de chargement de bande dans une cassette effectuée par l'unité selon l'une quelconque des revendications 1 à 12, comprenant les étapes suivantes:
- engagement d'une bande magnétique (22) sur le troisième bloc de support de bande (21);
- extraction de l'amorce (11) de la cassette (4);
- engagement de ladite amorce extraite (11) sur les premier et deuxième blocs de support (16, 17);
- découpage de ladite amorce extraite (11) entre lesdits premier et deuxième blocs de support (16, 17);
- déplacement desdits deuxième et troisième blocs (17, 21) en vue d'effectuer l'alignement entre ladite bande magnétique (22) sur ledit troisième bloc de support (21) et l'amorce (11) sur ledit premier bloc de support (16);
- fixation d'une pièce de bande de soudage (27a) unissant ladite bande d'usage (22) et ladite amorce (11);
- enroulement de la bande magnétique (22) dans la cassette (4);
- découpage de ladite bande magnétique (22) entre lesdits premier et troisième blocs de support (16, 21);
- déplacement desdits deuxième et troisième blocs de support (17, 21) pour effectuer l'alignement entre la bande magnétique (22) sur ledit premier bloc de support (16) et l'amorce (11) sur ledit deuxième bloc de support (17);
- fixation d'une pièce de bande de soudage (27a) unissant la bande d'usage (22) et l'amorce (11);
chacune desdites étapes de fixation étant effectuée par:
- le déplacement desdits premier, deuxième et troisième blocs (16, 17, 21) d'une condition écartée à une condition rapprochée de la cassette (4) pour amener ladite bande magnétique (22) et ladite amorce (11) alignées en engagement avec les moyens applicateurs de bande adhésive (29);
- le déplacement desdits premier, deuxième et troisième blocs (16, 17, 21) de la condition rapprochée à la condition écartée.

14. Méthode selon la revendication 13, dans laquelle ledit engagement est obtenu par:
- le déplacement desdits premier, deuxième et troisième blocs de support (16, 17, 21) de ladite condition écartée à ladite condition rapprochée de la cassette (4) pour engager l'amorce extraite (11) sur lesdits premier et deuxième blocs de support (16, 17); et
- le déplacement desdits premier, deuxième et troisième blocs (16, 17, 21) de ladite condition rapprochée à ladite condition écartée de la cassette (4).

15. Méthode selon la revendication 13, comprenant les étapes additionnelles suivantes:
- déplacement desdits moyens applicateurs de bande adhésive (29) d'une position de repos à une position d'extraction;
- découpage d'une pièce de bande de soudage (27a) alimentée par des moyens d'alimentation en bande de soudage (26);
- engagement desdites pièces découpées de bande de soudage (27a) sur lesdits moyens applicateurs de bande adhésive (29);
- déplacement desdits moyens applicateurs de bande (29) de ladite condition d'extraction à ladite condition de repos;
- déplacement desdits moyens applicateurs de bande adhésive (29) à une position d'application à laquelle ils sont en regard desdits premier (16) et deuxième ou troisième blocs de support (17, 21) portant la bande magnétique (22) et l'amorce (11) alignées pour appliquer ladite pièce découpée de bande de soudage (27a), de manière à unir ladite bande magnétique (22) et l'amorce (11).

16. Méthode selon la revendication 15, dans laquelle chacune desdites étapes de découpage est réalisée simultanément à ladite étape de déplacement desdits moyens applicateurs de bande adhésive (29) de la position de repos à la position de préhension, sous l'action de premiers moyens de découpage (19) portés par lesdits moyens applicateurs de bande (29).

17. Méthode selon la revendication 13, dans laquelle le déplacement desdits deuxième et troisième blocs de support (17, 21) et le mouvement desdits premier, deuxième et troisième blocs (16, 17, 21) se produisent le long d'un plan commun.

18. Méthode selon la revendication 17, dans laquelle ledit plan commun est un plan vertical le long de la face de la machine (5) auquel lesdits blocs de support (16, 17, 21) sont associés de manière opératoire.
